# EUROPEAN PATENT APPLICATION

(11) **EP 4 814 633 A1**
(43) Date of publication of application: **30.09.2026**
(21) Application number: 26167997.1
(22) Date of filing: 26.03.2026
(51) Int. Cl.: G05B 19/402

(54) **AUTOMATED ROTATING STATIONS AND RELATED METHODS**

(30) Priority: 26.03.2025 US 202563777765 P
(71) Applicant: ATS Corporation, Cambridge, ON N3H 4R7 (CA)
(72) Inventor: MORRISON, Kristopher James, Cambridge, Ontario, N3H 4R7 (CA); TAIT, David Andrew, Cambridge, Ontario, N3H 4R7 (CA); NICHOLSON, Kenneth Wayne, Cambridge, Ontario, N3H 4R7 (CA); TRAN, Hang Thu Thi, Cambridge, Ontario, N3H 4R7 (CA)
(74) Representative: Noble, Nicholas

(57) **Abstract**

Various automated rotating stations and related methods are disclosed. A method for processing workpieces in an automated mass production process includes advancing a supply carrier toward a receiving position of a rotating station, the supply carrier holding at least one workpiece assembly, the rotating station including at least one tooling and at least one sensor; advancing the at least one tooling towards the receiving position; determining an initial orientation of the at least one workpiece assembly; determining a rotating value; rotating the at least one rotational workpiece; and monitoring the rotating process for identifying a rotating error and flagging the at least one workpiece assembly for review in response to identifying the rotating error.

## Description

### RELATED APPLICATIONS

This application claims priority to US Provisional Application No. 63/777,765 filed March 26, 2025, titled "Automated Rotating Stations and Related Methods," the entire contents of which are incorporated herein by reference for all purposes.

### TECHNICAL FIELD

The present disclosure relates generally to automated mass production systems and, more particularly, to methods and systems for processing workpieces involving rotational operations, including but not limited to power spring winding, threading, and locking operations, within high-throughput automated manufacturing environments.

### BACKGROUND

Automated mass production processes can involve complex systems with multiple coordinated components to achieve high throughput operations. Such automated mass production processes can be carried out via an automated mass production system that includes multiple processing stations, each performing one or more processing steps such as presenting a workpiece, assembling a workpiece assembly, performing value-added operations, validating workpiece quality, and the like.

When a portion of a high throughput system fails or becomes inefficient due to for example damage, misalignment, or wear, the entire system may need to be shut down for repairs and maintenance, resulting in significant operational delays and costs. Additionally, defective workpieces that are not identified and removed from the production line can cause cascading failures in downstream processing stations, potentially damaging expensive tooling and contaminating product batches. Accordingly, monitoring the automated mass production process in real-time is advantageous for preventing damage to system components, identifying defective workpieces, and improving overall operational efficiency and product quality.

### SUMMARY

The various embodiments described herein generally relate to systems and methods for processing workpieces that involve a rotating process in an automated mass production process.

In accordance with the present disclosure there is provided a method for processing workpieces in an automated mass production process, the method comprising: advancing a supply carrier toward a receiving position of a rotating station, the supply carrier holding at least one workpiece assembly, the workpiece assembly comprising at least one stationary workpiece and at least one rotational workpiece, and the rotating station comprising at least one tooling and at least one sensor; advancing the at least one tooling towards the receiving position in electronic synchronization with the advancement of the supply carrier towards the receiving position; determining an initial orientation of the at least one workpiece assembly; determining a rotating value based on the initial orientation; preparing the at least one workpiece assembly for rotating, including coupling the at least one tooling to the at least one workpiece assembly; rotating the at least one rotational workpiece by driving the at least one tooling to rotate the at least one rotational workpiece relative to the at least one stationary workpiece according to the rotating value.

In a further embodiment of the method, the rotating value corresponds to a number of degrees of rotation calculated to achieve a predetermined torque or mechanical engagement state in the at least one rotational workpiece.

In a further embodiment of the method, the at least one stationary workpiece comprises a plunger rod guide, and the at least one rotational workpiece comprises a power spring and an outer housing, and wherein rotating the at least one rotational workpiece comprises driving the at least one tooling to wind the power spring around the plunger rod guide to store mechanical energy in the power spring.

In a further embodiment of the method, coupling the at least one tooling to the at least one workpiece assembly comprises coupling a mandrel of the at least one tooling to the plunger rod guide; and wherein determining the preparation error associated with the at least one workpiece assembly comprises determining that a position of the plunger rod guide relative to a portion of the at least one tooling is outside of an acceptable position range.

In a further embodiment of the method, the at least one sensor comprises a mechanical switch positioned on the rotating station for determining a vertical position of the plunger rod guide.

In a further embodiment of the method, coupling the at least one tooling to the at least one workpiece assembly comprises: driving an actuator of the at least one tooling to position the at least one tooling at a desired vertical position; and wherein determining the preparation error associated with the at least one workpiece assembly comprises determining that an actuator position lag is outside of an acceptable actuator position lag range, the actuator position lag representing a difference between an actual vertical position of the at least one tooling and the desired vertical position of the at least one tooling.

In a further embodiment of the method, the desired vertical position is determined to enable the at least one tooling to engage with one or more ribs on an inner surface of the outer housing.

In a further embodiment of the method, the method further comprises receiving a characterization profile, the characterization profile representing an expected data profile of the at least one sensor during said rotating of the at least one rotational workpiece, wherein identifying the rotating error comprises comparing the characterization profile to an actual data profile of the at least one sensor during said rotating of the at least one rotational workpiece.

In a further embodiment of the method, the characterization profile comprises a torque graph; and wherein said comparing comprises matching one or more features of the torque graph and the actual data profile.

In a further embodiment of the method, identifying the rotating error further comprises determining that a force generated by said driving the at least one tooling to rotate the at least one rotational workpiece relative to the at least one stationary workpiece is outside of an acceptable force range.

In a further embodiment of the method, the at least one sensor comprises a load cell positioned on the rotating station for measuring a force generated during said rotating.

In a further embodiment of the method, the method further comprises: receiving image data associated with the at least one workpiece assembly, wherein determining the initial orientation of the workpiece assembly comprises determining, from the image data, a radial position of the workpiece assembly.

In a further embodiment of the method, determining the rotating value based on the initial orientation comprises: receiving a baseline rotating value, the baseline rotating value corresponding to a number of degrees to rotate the rotational workpiece to apply a desired torque to the rotational workpiece; and adjusting the baseline rotating value based on the initial orientation to determine the rotating value.

In a further embodiment of the method, said review comprises at least one of removing the at least one workpiece assembly from the automated mass production process and performing further quality control.

In a further embodiment of the method, the method further comprises: locking a position of the at least one rotating workpiece relative to a position of the at least one stationary workpiece; and retracting the at least one tooling from the at least one workpiece assembly.

In accordance with the present disclosure there is further provided an automated mass production system comprising: a plurality of supply carriers, each supply carrier holding at least one workpiece assembly and advanceable through a receiving position; a rotating station adjacent the receiving position, the rotating station including at least one tooling and at least one sensor; and a control system for synchronizing operation of the supply carriers and rotating station, the control system configured to: advance a supply carrier toward the receiving position, the supply carrier holding at least one workpiece assembly, the workpiece assembly comprising at least one stationary workpiece and at least one rotational workpiece; advance the at least one tooling towards the receiving position in electronic synchronization with the advancement of the supply carrier towards the receiving position; determine an initial orientation of the at least one workpiece assembly; determine a rotating value based on the initial orientation; prepare the at least one workpiece assembly for rotating, including coupling the at least one tooling to the at least one workpiece assembly; rotate the at least one rotational workpiece by driving the at least one tooling to rotate the at least one rotational workpiece relative to the at least one stationary workpiece according to the rotating value.

In a further embodiment of the automated mass production system, the rotating value corresponds to a number of degrees of rotation calculated to achieve a predetermined torque or mechanical engagement state in the at least one rotational workpiece.

In a further embodiment of the automated mass production system, the control system is further configured to: monitor the rotating of the at least one rotational workpiece by comparing sensor data generated by the at least one sensor during said rotating to a characterization profile representing an expected data profile of the at least one sensor, and identify a rotating error when the sensor data deviates from the characterization profile beyond an acceptable range; and flag the at least one workpiece assembly for review in response to identifying the rotating error.

In a further embodiment of the automated mass production system, the control system is further configured to: while preparing the at least one workpiece assembly for rotating, evaluate sensor data generated by the at least one sensor to determine whether there is a preparation error associated with the at least one workpiece assembly and flag the at least one workpiece assembly for review in response to determining the preparation error associated with the workpiece assembly.

In a further embodiment of the automated mass production system, the at least one stationary workpiece comprises a plunger rod guide, and the at least one rotational workpiece comprises a power spring and an outer housing, and wherein rotating the at least one rotational workpiece comprises driving the at least one tooling to wind the power spring around the plunger rod guide.

In a further embodiment of the automated mass production system, coupling the at least one tooling to the at least one workpiece assembly comprises coupling a mandrel of the at least one tooling to the plunger rod guide; and wherein determining the preparation error associated with the at least one workpiece assembly comprises determining that a position of the plunger rod guide relative to a portion of the at least one tooling is outside of an acceptable position range.

In a further embodiment of the automated mass production system, the at least one sensor comprises a mechanical switch positioned on the rotating station for determining a vertical position of the plunger rod guide.

In a further embodiment of the automated mass production system, coupling the at least one tooling to the at least one workpiece assembly comprises driving an actuator of the at least one tooling to position the at least one tooling at a desired vertical position; and wherein determining the preparation error associated with the at least one workpiece assembly comprises determining that an actuator position lag is outside of an acceptable actuator position lag range, the actuator position lag representing a difference between an actual vertical position of the at least one tooling and the desired vertical position of the at least one tooling.

In a further embodiment of the automated mass production system, the desired vertical position is determined to enable the at least one tooling to engage with one or more ribs on an inner surface of the outer housing.

In a further embodiment of the automated mass production system, the control system is further configured to receive a characterization profile, the characterization profile representing an expected data profile of the at least one sensor during said rotating of the at least one rotational workpiece, wherein identifying the rotating error comprises comparing the characterization profile to an actual data profile of the at least one sensor during said rotating of the at least one rotational workpiece.

In a further embodiment of the automated mass production system, the characterization profile comprises a torque graph; and wherein said comparing comprises matching one or more features of the torque graph and the actual data profile.

In a further embodiment of the automated mass production system, identifying the rotating error further comprises determining that a force generated by said driving the at least one tooling to rotate the at least one rotational workpiece relative to the at least one stationary workpiece is outside of an acceptable force range.

In a further embodiment of the automated mass production system, the at least one sensor comprises a load cell positioned on the rotating station for measuring a force generated during said rotating.

In a further embodiment of the automated mass production system, the control system is further configured to: receive image data associated with the at least one workpiece assembly, wherein determining the initial orientation of the workpiece assembly comprises determining, from the image data, a radial position of the workpiece assembly.

In a further embodiment of the automated mass production system, determining the rotating value based on the initial orientation comprises: receiving a baseline rotating value, the baseline rotating value corresponding to a number of degrees to rotate the rotational workpiece to apply a desired torque to the rotational workpiece; and adjusting the baseline rotating value based on the initial orientation to determine the rotating value.

In a further embodiment of the automated mass production system, said review comprises at least one of removing the at least one workpiece assembly from the automated mass production process and performing further quality control.

In a further embodiment of the automated mass production system, the control system is further configured to: lock a position of the at least one rotating workpiece relative to a position of the at least one stationary workpiece; and retract the at least one tooling from the at least one workpiece assembly.

In accordance with the present disclosure there is further provided a non-transitory computer readable medium storing instructions which when executed by a processor configure the processor to perform a method according to any of the methods described above.

### BRIEF DESCRIPTION OF THE DRAWINGS

Several embodiments will be described in detail with reference to the drawings, in which:
FIG. 1 is a block diagram of an example automated mass production system;
FIG. 2 is a block diagram of an example production device of the automated mass production system of FIG. 1;
FIG. 3 is a data flow schematic of an example operation involving the automated mass production system of FIG. 1;
FIG. 4 is a perspective view of an example processing station operable with the automated mass production system of FIG. 1;
FIG. 5 is a perspective view of a portion of the example processing station of FIG. 4;
FIG. 6A is a side view of an example workpiece assembly to be processed by the automated mass production system of FIG. 1;
FIG. 6B is a side view of example components of the workpiece assembly of FIG. 6A;
FIG. 6C is a perspective view of an example component of the workpiece assembly of FIG. 6A;
FIG. 6D is a side view of an example component of the workpiece assembly of FIG. 6A;
FIG. 7 is a side view of a portion of an example processing station of the automated mass production system of FIG. 1;
FIG. 8 is a photograph of an example workpiece assembly (top view) to be processed by the automated mass production system of FIG. 1;
FIG. 9 shows a perspective view of another portion of the example processing station of FIG. 4 during engagement with the automated mass production systems disclosed herein;
FIG. 10 shows a perspective view of another portion of the example processing station of FIG. 4 during engagement with the automated mass production systems disclosed herein;
FIG. 11 is a side view of a portion of another example processing station of the automated mass production system of FIG. 1;
FIG. 12 is a cross-sectional side view of a portion of the example processing station of FIG. 4 during engagement with the automated mass production systems disclosed herein;
FIG. 13 shows an example characterization graph usable by the systems and methods disclosed herein;
FIG. 14 shows another example characterization graph usable by the systems and methods disclosed herein;
FIG. 15 depicts a force vs. distance graph monitored during the processing of workpieces;
FIG. 16 depicts a time vs. distance graph monitored during the processing of workpieces;
FIG. 17 is a flowchart showing an example method for processing workpieces with the systems disclosed herein.

The drawings, described below, are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

### DETAILED DESCRIPTION

A production process can involve processing (e.g. feeding, indexing, transferring, assembling, transporting, validating, etc.) parts to produce a product. During the production process, the part requiring further processing (for example, subcomponent, assembly, or partially finished product) can be referred to as a workpiece. The workpiece can be moved through an automated mass production system among various production devices that operate on the workpiece(s) in production of the product.

In some applications, a production process may require assembly of parts together, for example, rotating (e.g., winding, threading, locking, etc.) one portion of a workpiece assembly relative to another portion of the workpiece assembly. According to some aspects of the present disclosure, a rotational processing system can include a plurality of production devices electronically synchronized to improve efficiency of workpiece processing in a continuous mass production process. According to some aspects, the production devices of the workpiece processing system can include one or more presentation devices (e.g. feed, indexing, and/or transport devices, etc.) and one or more processing devices (e.g. pick-and-place assembly robots, etc.) operable in electronic synchronization with one another to facilitate efficient workpiece processing. According to some aspects, the workpiece processing system can include a feed device for separating and delivering a leading workpiece from a stream of workpieces, an indexing device for receiving workpieces from the feed device and presenting the workpieces for processing, and a pick-and-place robot for transferring the workpieces from the indexing device to another workpiece for installation thereon. The workpiece can be held by a transport device (e.g. carrier) movable along a track for transporting the workpiece from and/or to other production devices for further processing. Operation of the feed device, indexing device, pick-and-place robot, and carrier can be electronically synchronized for improved efficiencies relative to some conventional workpiece processing systems.

Automated mass production processes and systems generally involve high throughput processing. Accordingly, if one or more components of the automated mass production system becomes damaged or faulty, operations can be significantly impacted.

For example, if a tooling of a production device in the automated mass production system becomes misaligned with a workpiece during processing (e.g., during engagement between the tooling and the workpiece), the tooling and/or workpiece can be damaged if the production device continues to process the workpiece while the misalignment is present. When a tooling becomes damaged, the entire automated mass production system may need to be shut down while the tooling is repaired. When a workpiece becomes damaged, it may not be suitable for further processing and may cause damage to the system during subsequent processing. Accordingly, it can be advantageous for the automated mass production system to flag a damaged workpiece to prevent further processing of the workpiece and/or for removal of the workpiece from the system.

As another example, in automated mass production processes that involve rotating a workpiece, an error may occur during rotation, such as applying too much or too little torque and/or rotational force. Such errors can damage the workpiece and/or tooling, and/or result in a faulty workpiece. It can be advantageous for the automated mass production system to flag such damaged workpieces to prevent further processing of the workpiece and/or for removal of the workpiece from the system.

Furthermore, it can be advantageous for the automated mass production system to identify what type of failure has occurred. For example, the automated mass production system can identify that a particular failure has occurred due to a misalignment or that another particular failure has occurred due to a rotational error. This enables the automated mass production system and/or an operator of the automated mass production system to make appropriate decisions and/or take appropriate actions to handle the failure and prevent future failures.

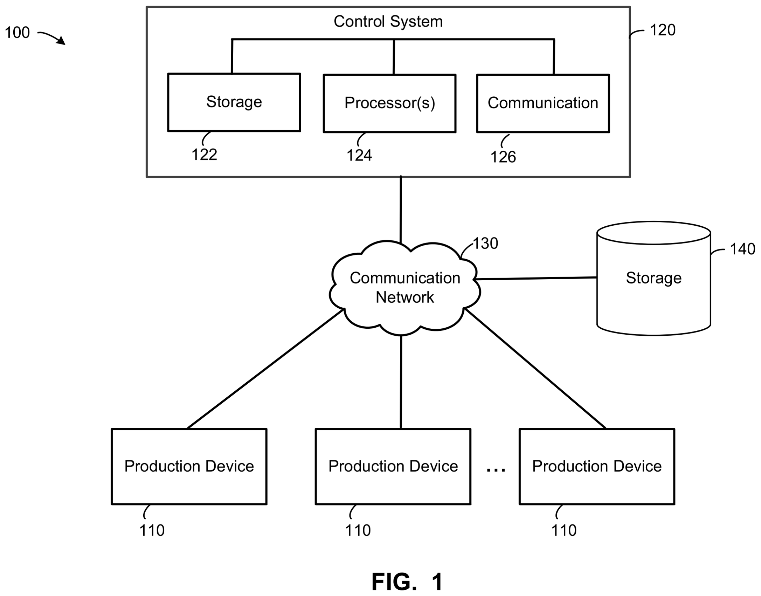

Referring to FIG. 1, a schematic of an example automated mass production system 100 is shown. In the example illustrated, the automated mass production system 100 includes a plurality of production devices 110 for processing workpieces, a production control system 120 for controlling operation of the production devices 110 and/or other system components to facilitate a mass production process, a communication network 130 for enabling communication among system components, and a production system storage component 140 for storing relevant data for the automated mass production system 100 (e.g. operational and/or control data relating to the production devices 110 and/or other aspects of the automated mass production system 100).

In the example illustrated, the control system 120 includes a control system storage component 122, one or more system processors 124, and a system communication component 126. The system processor 124 controls operation of the control system 120. In some examples, the system processor 124 and processors at the production devices 110 cooperate to control operation of the automated mass production system 100 (e.g. through determination and/or processing of control parameters and generation of control signals for operation and synchronization based on the control parameters).

In some examples, the storage component 122 (e.g. memory) can store data received from the production devices 110, data for coordinating operation of the production devices 110, property data in respect of each production device 110, etc. The storage component 122 can store computer programs executable by the system processor 124 to facilitate communication among and operation of the system components.

The production system storage component 140 can be accessible via the communication network 130 and provided in addition to or in lieu of the control system storage component 122. In some examples, the control system storage component 122 can store current operating data corresponding to current operation of the control system 120 (e.g. current position, speed, velocity, and/or acceleration of tooling), and the production system storage component 140 can store data for future use. In some examples, the storage component 140 can include third party data storage. The storage component 140 can store information about the production devices 110, including operating data, profile data (e.g., servomotor profile data), motion data (e.g., tool motion data), part/workpiece/product data, etc. Such data can be stored in the storage component 140 for subsequent retrieval by the production devices 110 and/or control system 120, for example, through download via communication network 130.

The communication network 130 can carry data to enable communication among system components (e.g. among the control system 120, production devices 110, storage component 140, and/or other devices/components), and can be a wired and/or wireless communication network. In some examples, components of the automated mass production system 100 (including, for example production devices 110 and control system 120) can include wireless communication interfaces to enable wireless communication through communication network 130.

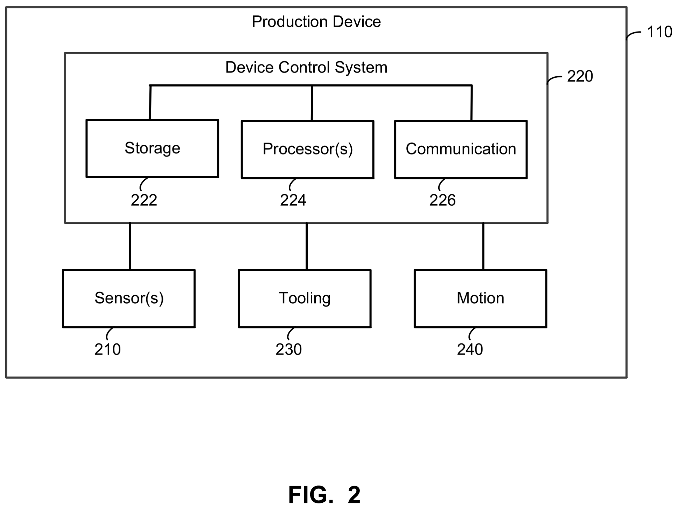

Referring to FIG. 2, a block diagram representing an example production device 110 is shown. In the example illustrated, the production device 110 includes a device control system 220, a sensor system 210, tooling 230, and a motion system 240.

In the example illustrated, the device control system 220 includes a device processor 224, a device storage component (e.g. memory) 222, and a device communication component 226. The device control system 220 is operable to control operation of the production device 110, and can collect and store sensor, tooling, and motion data for the production device 110 in the device storage component 222 for operational use and/or for providing to the control system 120 through network 130 to facilitate electronic synchronization of production devices 110.

The device storage component 222 can store data for operation of the production device 110 and/or to facilitate electronic synchronization. Example data can include, for example, operating data, part data, tool data, motion data, sensor data, etc. The sensor system 210 can include one or more sensors (e.g. range-finding, motion, vision systems, etc.) for collecting operational and/or environmental data for facilitating the production process. Each production device 110 can be equipped with a motion system 240 for movement of the production device 110 and/or components thereof (e.g. sensors, tooling, etc.). The motion system 240 can include, for example, one or more servo-motors and/or other actuators.

The production devices 110 can be equipped with tooling 230 for engaging with and processing workpieces. Tooling 230 can be used for, for example but not of limitation, part handling, manipulation, transport, etc. The operation of tooling 230 can be controlled by the device control system 220 based on, for example, sensor data from the sensor system 210 and operational data for the production device 110 or other production devices 110 and/or system components.

The tooling 230 can be in the form of, for example, one or more workpiece presentation tools for presenting the workpieces at predetermined locations for delivery and/or further processing and/or one or more workpiece processing tools for performing value-added operations on the workpieces. The workpiece presentation tools can be part of, for example, one or more transports, carriers, conveyors, screws, indexer, actuators, or other devices for, for example, separating a lead workpiece from other workpieces and delivery to another presentation and/or processing tool for subsequent processing. In some examples, the presentation tools can be part of a feed device and configured to, for example, load a workpiece at a delivery position at a leading end of a stream of like workpieces; separate the workpiece at the delivery position from the other workpieces; accelerate the workpiece; and deliver the workpiece at a predetermined delivery time, delivery position, delivery speed, and moving along a delivery trajectory. The workpiece presentation tool can be configured to deliver workpieces before loading one or more subsequent workpieces at the delivery position. In some examples, the workpiece presentation tools can be part of an indexing device and configured to, for example: receive one or more workpieces at a loading position (e.g. from a feed device); accelerate workpieces toward an unloading position; and present the workpieces at the unloading position for further processing. In some examples, the workpiece presentation tools can be part of a transport device and configured to, for example, receive one or more workpieces, accelerate the workpieces toward a receiving position (e.g. along a transport track) for a processing station, and present the workpieces at the processing position for processing by a processing tool.

Processing tools can be configured to conduct one or more operations on or with the workpieces. For example, the processing tools can be configured to manipulate a workpiece, assemble two or more workpieces together, reorient a workpiece for further processing, etc. In some examples, processing tools can include, e.g. end effectors such as manipulators and/or grippers for part manipulation and/or assembly. In some examples, the processing tools can be configured to, for example, receive one or more workpieces from a workpiece presentation tool (e.g. of an indexing device); move the workpiece toward a processing position; and process the workpiece at the processing position including rotating one or more workpieces of a workpiece assembly relative to one or more other workpieces of the workpiece assembly.

Machine-readable instructions stored in storage component 222 (or in storage 122, 140) can cause the device control system 220 (and/or 120) to execute various methods disclosed herein including generation of one or more signals (e.g., output data) useful in operation of the production devices 110. Such machine-readable instructions can be incorporated into one or more computer program products which can be stored on suitable medium or media. In some embodiments, the machine-readable instructions can be executable by processor 224 and/or 124 for generation of signals useful in electronic synchronization of two or more operations carried out by the tooling 230 (e.g. by presentation and processing tools) of the production devices 110. The machine-readable instructions can be executable by the processor(s) for determination and/or selection of control parameters for operation of the tooling 230 and generate signals representative of the control parameters. For example, the machine-readable instructions can be configured to cause processor 224 and/or 124 to generate signals useful in the electronic synchronization of the delivery of workpieces by a workpiece presentation tool and receipt of the workpieces by a processing tool.

The synchronization of two or more operations performed by the tooling 230 of one or more production devices 110 can utilize electronic camming (e.g. instead of mechanical cams, gears, or linkages). In various embodiments, the use of such electronic synchronization can facilitate system flexibility and improve system performance relative to some more-conventional systems utilizing mechanical synchronization means. In some examples, storage component 222 (and/or 122, 140) can hold data representative of one or more cam profiles to be used in the operation of the tooling 230 of one or more production devices 110. For example, such cam profile(s) can be in tabular form and can include corresponding positions representative of synchronized trajectories to be followed by the tooling 230 during operation. In some examples, one tooling component 230 can be operated as a master device and another tooling component 230 can be operated as a slave device executing movements based on the execution of movements by the master device in order to substantially maintain synchronization between the slave device and the master device. In some examples, the production devices 110 can include one or more master devices and one or more respective slave devices. For example, multiple slave devices can be electronically cammed with a master device.

The machine-readable instructions can be configured to cause processor 224 and/or 124 to generate signals useful in electronic synchronization (e.g. camming) of the delivery of a workpiece by a presentation tool and of receipt of the workpiece by a processing tool (or another presentation tool). In some embodiments, the machine-readable instructions can be configured to cause the processor(s) to generate signals useful in electronic synchronization of loading, separation, acceleration, and delivery of a workpiece by a presentation tool and of receipt of the workpiece by a processing tool. In some examples, the machine-readable instructions can be configured to cause the processor(s) to generate signals useful in controlling movement of a workpiece along a delivery trajectory and controlling movement of a processing tool along a processing tool trajectory for electronic synchronization of the workpiece and processing tool.

In some examples, the machine-readable instructions can be configured to cause processor 224 and/or 124 to generate signals useful in controlling at least some aspect of the processing of a workpiece. For example, such processing can include one or more operations that can be carried out by the processing tool. Such operations can include, for example, rotating one or more workpieces of a workpiece assembly relative to one or more other workpieces of the workpiece assembly. The machine-readable instructions may, for example, be configured to cause the processor(s) to generate signals useful in electronic synchronization of the processing of a workpiece and one or more operations associated with presentation and/or processing tools. In some examples, one or more operations conducted by the presentation or processing tools can be under binary control rather than direct electronic synchronization. In some examples, the triggering of an operation via a binary control signal can be dependent on the position of a master device and can still be based on a cam profile. The production devices 110 can include one or more servo-motors associated with tooling components 230, and the machine-readable instructions can be configured to cause processor 224 and/or 124 to generate signals useful in controlling the servo-motors according to a predetermined cam profile to carry out electronically synchronized operations according to the methods herein.

The production devices 110 can include a numerically synchronized control architecture. For example, transfer and presentation of workpieces (e.g. by presentation tools) according to the methods disclosed herein can include a first computer numerically controlled operation and the receiving of the workpiece (e.g. by a processing tool or another presentation tool) can include a second computer numerically controlled operation. In some examples, the loading, separating, accelerating, and delivering of workpieces can include a first computer numerically controlled operation and the receiving of the workpieces can include a second computer numerically controlled operation. In some examples, the receiving of a workpiece can include a first computer numerically controlled operation and the processing of the workpiece can include a second computer numerically controlled operation. In such examples, the first computer numerically controlled operation and the second computer numerically controlled operation can be electronically synchronized (e.g. electronically cammed).

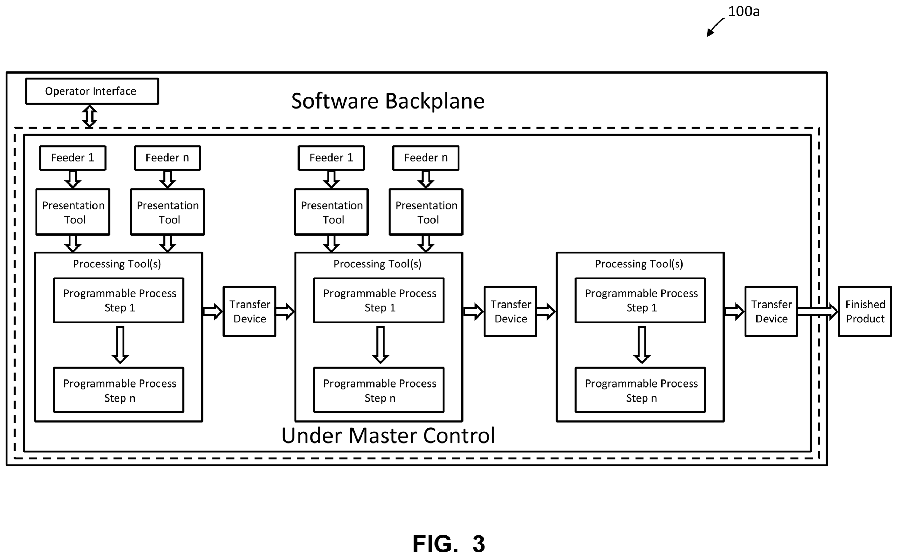

Referring to FIG. 3, an example implementation 100a of the automated mass production system 100 is shown schematically. The example automated mass production system 100a can be configured to carry out steps from processes disclosed herein. Automated mass production system 100a can receive workpieces and/or raw materials as inputs; progressively add value to them via processing tools; and discharge them either as discrete finished products, as unfinished products, or as rejected scrap (i.e., defective products).

As shown in FIG. 3, automated mass production system 100a can receive the workpieces and/or materials from one or more feeders (e.g. of a feed device) for delivering workpieces and/or materials to another presentation tool (e.g. of an indexing device). The delivery from the feeders can be done directly or via a respective buffer. Each presentation tool or transfer device (e.g. workpiece carrier) of the automated mass production system 100a can be numerically controlled and configured to deliver the materials and/or workpieces to one or more processing tools (e.g. of a processing device). Each processing tool can add value to a workpiece and/or material via one or more programmable process steps. A given processing tool can operate in parallel to and/or in series with one or more other processing tools and/or presentation tools. Once the workpiece passes through a final processing tool, it can be discharged either as a successfully completed and validated finished product, as an unfinished product, or as rejected scrap. Human interaction with automated mass production system 100a can be through an operator interface.

The system can include validation stations including validation devices configured to conduct inspections, checks, and/or tests on one or more of the workpieces. The validation stations can be located at, for example, one or more feeders, presentation tools, transfer devices, and/or processing tools. At these points, workpieces can be eliminated from the system as scrap if they do not meet one or more predetermined inspection criteria. Validation stations can be configured to conduct inspection, check, and/or test operations on one or more of workpieces that can be electronically synchronized with other devices, such as, for example, a master device of the production devices 110.

The various elements described above can be controlled at least in part by software resources known as base software backplane. The backplane can be configured to permit various elements of the system to carry out various control functions including: management of inputs and outputs; management of local control tasks, including programmable process steps within processing tools and local inspection tasks within validation stations; communications between different elements in the system and communication with a human user via the operator interface.

The automated mass production system 100a can include a numerically synchronized control architecture. In various embodiments, the feeders, presentation tools, processing tools, and transfer devices can be numerically controlled. Movement of workpieces and materials through the system can occur along programmable axes of motion, which can be either rotary or linear. Movement of tooling associated with the programmable process steps of processing tools can also take place along programmable linear and/or rotary axes of motion.

An example of production devices 110 of the automated mass production system 100 can include a transport track supporting a plurality of carriers. Each carrier can include a pallet configured for holding at least one workpiece and can be movable along the track (e.g. through one or more servo-drives) among a plurality of processing stations. Each processing station can include one or more production devices that can be operable in electronic synchronization with each other, the carriers, and/or production devices of other processing stations for processing the workpieces.

The processing stations can include a first processing station for transferring one or more workpieces to each carrier and a second processing station for delivering and installing one or more parts onto the receiving assemblies to form a workpiece assembly held by the second processing station. The processing stations can further include a third and fourth processing station for delivering and installing (e.g., rotating, winding, threading etc.) other product parts that can be held in the carrier. A fifth process station can be included for validating, testing, and/or inspecting (and/or performing some other operation) on the workpiece assemblies held by the processing stations. The processing stations can also include a sixth processing station for removing the workpiece assemblies from the processing stations for discharge from the automated mass production system 100, either as a successfully completed and validated finished product, as an unfinished product, or as a rejected defective product. These processing stations are provided as an example only, and any other number, order, and/or functionality of stations is possible.

The automated mass production system 100 as described above is configured for installation of rotational workpieces (e.g., power spring) on stationary workpieces (e.g., plunger rod guide), and one of the processing stations can include a rotating station for processing the workpiece assemblies (e.g. winding the power spring around the plunger rod guide). In some embodiments, the rotational workpieces and stationary workpieces can include other types of workpieces (e.g., threading an actuator onto a pump, locking a pump assembly etc.).

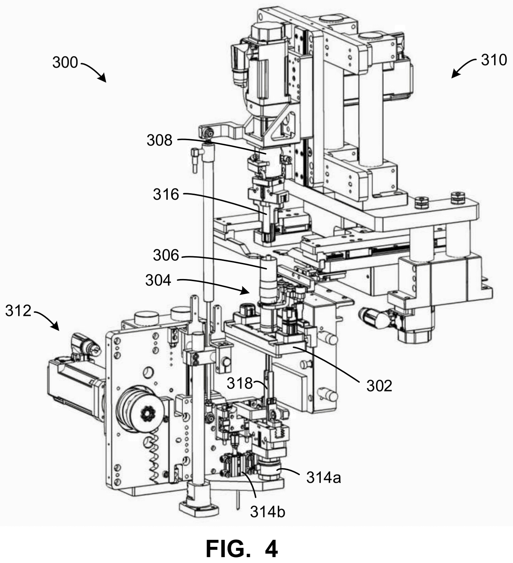

Referring now to FIG. 4, an example rotating station 300 is illustrated. The rotating station 300 can include a plurality of production devices 110 in electronic synchronization to facilitate efficient processing of the workpieces. In the example illustrated, the production devices 110 of the station 300 include a supply carrier 302 that moves along a track or similar conveyor (not shown) for carrying a workpiece assembly 306 to a receiving position 304. In some embodiments, the automated mass production system 100 can have a plurality of supply carriers 302, each holding at least one workpiece assembly 306 and being advanceable through the receiving position 304. The supply carrier 302 can be a puck, a pallet, a shuttle, or any other carrying method, including any other mover driven by any conveying device. The production devices 110 can further include an upper tooling assembly 310 with one or more upper toolings 316, a lower tooling assembly 312 with one or more lower toolings 318, a motion system with one or more actuators 308 (e.g., servomotors), and one or more sensors 314. Although the following description will generally refer to example rotating station 300 and its components, it should be understood that such references can also include similar rotating stations discussed herein.

The rotating station 300 includes at least one tooling, such as upper tooling 316 and/or lower tooling 318. In some embodiments, the tooling can include a gripper, a mandrel, a crowder, a support, and/or a nest vacuum tool. In some embodiments, one or more portions of the tooling can be driven by one or more actuators, such as actuator 308. For example, one or more actuators can be used to adjust the position (e.g., vertical position, horizontal position, radial orientation etc.) of the tooling and/or to rotate the tooling. In some embodiments, the actuator 308 can include a servomotor.

The rotating station 300 includes at least one sensor 314, such as sensors 314a and 314b. In some embodiments, the rotating station 300 includes additional sensors embedded on one or more components of the rotating station 300. For example, a radial encoder (not shown) can be embedded on actuator 308. In some embodiments, the sensor 314a can include a load cell positioned on the rotating station 300 for measuring a force generated during processing (e.g., during rotation of a workpiece assembly component). In some embodiments, the data generated by the load cell 314a can be used alongside data generated by one or more additional sensors 314. For example, the automated mass production system 100 can use data from a load cell 314a and a radial encoder embedded on actuator 308 to generate a torque-position graph. In some embodiments, the sensors can include a linear position sensor 314b that provides a distance between the upper tooling assembly 310 and lower tooling assembly 312. In some embodiments, the sensors can include a mechanical switch positioned on the rotating station 300 for determining a position, such as a vertical position, of the workpiece assembly 306 and/or tooling 316, 318. In some embodiments, the mechanical switch can include a reed switch.

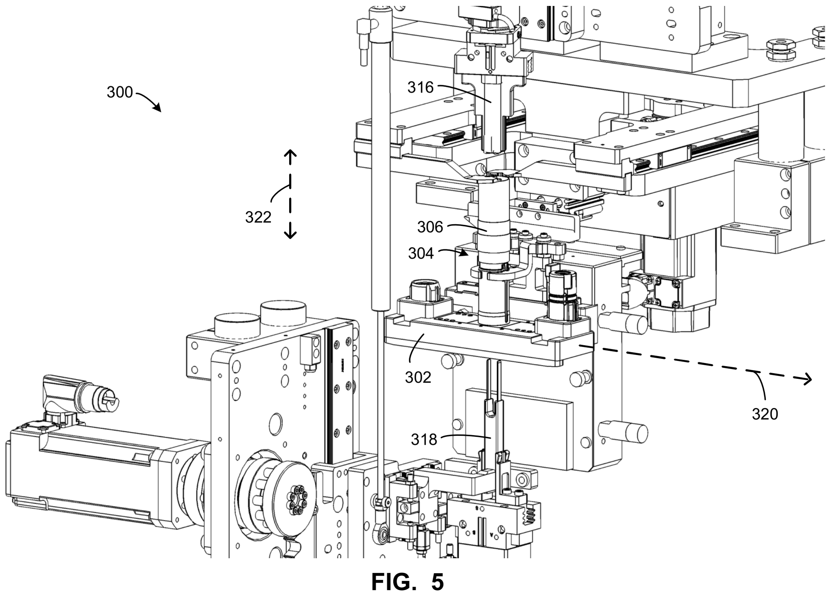

Referring to FIG. 5, a portion of the example rotating station 300 is illustrated. As shown, the automated mass production system 100 can advance the supply carrier 302 to the receiving position 304 located adjacent the rotating station 300 along the direction 320. The tooling 316 and/or 318 can be advanced toward the receiving position 304 along the direction 322 in electronic synchronization with the advancement of the supply carrier 302 to the receiving position 304. For example, as the supply carrier 302 holding one or more workpiece assemblies 306 is advanced towards the receiving position 304, the tooling 316 and/or 318 can be advanced towards the receiving position 304 so that the tooling 316 and/or 318 is positioned to engage with the workpiece assembly 306 as the supply carrier 302 arrives at the receiving position 304. Such electronic synchronization can be advantageous to the efficiency and throughput of the automated mass production process. The synchronization may allow the tooling 316/318 to begin moving once the supply carrier is clear of any possible collisions. The synchronization may allow other movements of the tooling 316/318 to be carried out while the carrier is moving. For example, while it may not be possible to lower the tooling vertically until the carrier is at, or at least near, to the receiving location, it may be possible to move the rotating tooling into a desired position or move the tooling along other axis that would not cause, or possibly risk, a collision with the carrier as it moves to the receiving position.

The supply carrier 302 can hold at least one workpiece assembly 306. A workpiece assembly 306 can include at least one stationary workpiece and at least one rotational workpiece. Stationary workpieces can include workpieces that generally remain in a fixed position during processing at the rotating station 300. However, stationary workpieces are not so limited and in some embodiments, stationary workpieces may be moved or repositioned during processing. Rotational workpieces can include workpieces that generally rotate (e.g., winding, threading, locking etc.) during processing at the rotating station 300. In some embodiments, the rotational workpiece rotates with respect to the stationary workpiece (e.g., rotational workpiece rotates around or within the stationary workpiece). The stationary workpiece and the rotational workpiece can be coupled, either directly or indirectly (e.g., via another component of the workpiece assembly 306). In some embodiments, the stationary workpiece and the rotational workpiece are not coupled. In some embodiments, the workpiece assembly 306 includes other components and/or workpieces.

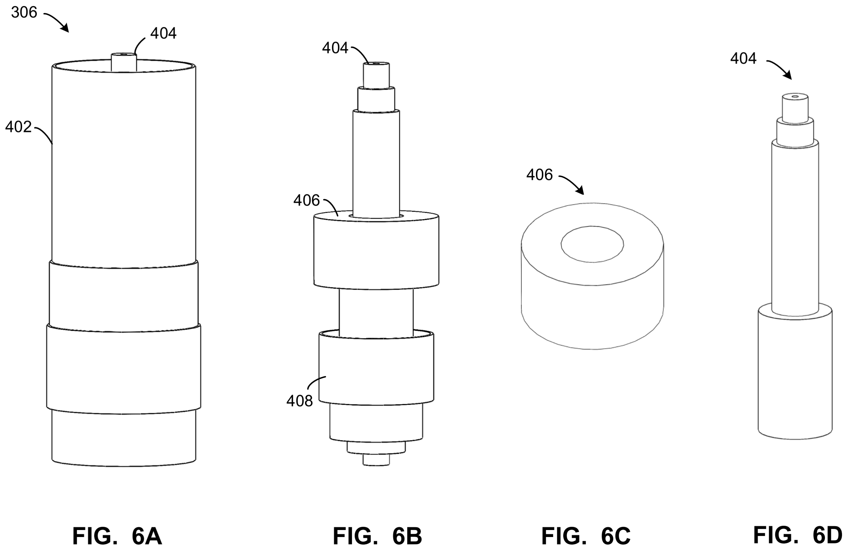

Referring to FIGS. 6A to 6D, an example workpiece assembly 306 and example components of the workpiece assembly 306 are shown. In the example illustrated, the workpiece assembly 306 is a power pack subassembly of an autoinjector. The workpiece assembly 306 includes an outer housing 402, a plunger rod guide 404, and a power spring 406. The stationary workpiece can include the plunger rod guide 404. The rotational workpiece can include the power spring 406 and the outer housing 402. During assembly, the power spring 406 is rotated a number of times in order to store mechanical energy in the spring. The power spring 406 is coupled to each of the plunger rod guide 404 and the outer housing 402. The workpiece assembly 306 can further include a ring 408 for locking a position of the workpiece assembly 306 by locking the ring 408 to the outer housing 402. Although the following description will generally refer to example workpiece assembly 306 and its components, it should be understood that such references can also include similar workpiece assemblies discussed herein.

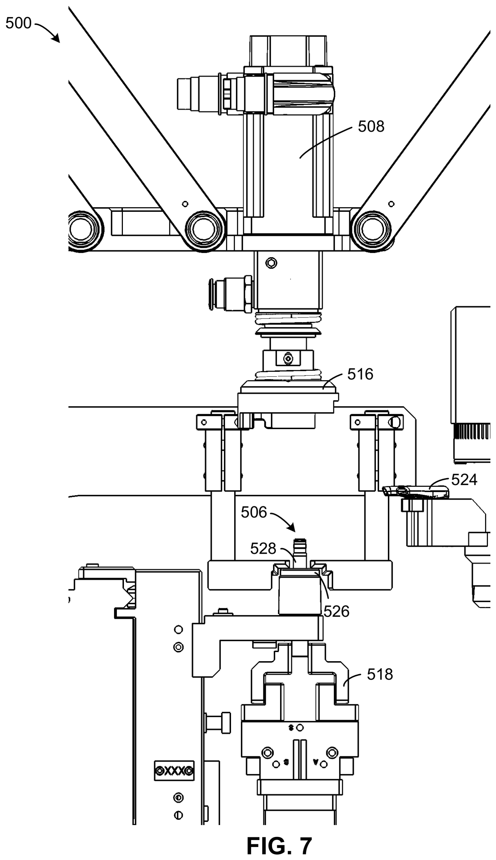

Referring to FIG. 7, another example workpiece assembly 506 at an example rotating station 500 is shown. Rotating station 500 can include similar components to rotating station 300. For example, rotating station 500 includes an actuator 508, an upper tooling 516, and a lower tooling 518. In the example illustrated, the workpiece assembly 506 is a pump assembly. The workpiece assembly 506 includes an actuator 524 and a pump. The pump includes a piston 528 and a chaplet 526. The stationary workpiece can include the piston 528 and the chaplet 526. The rotational workpiece can include the actuator 524.

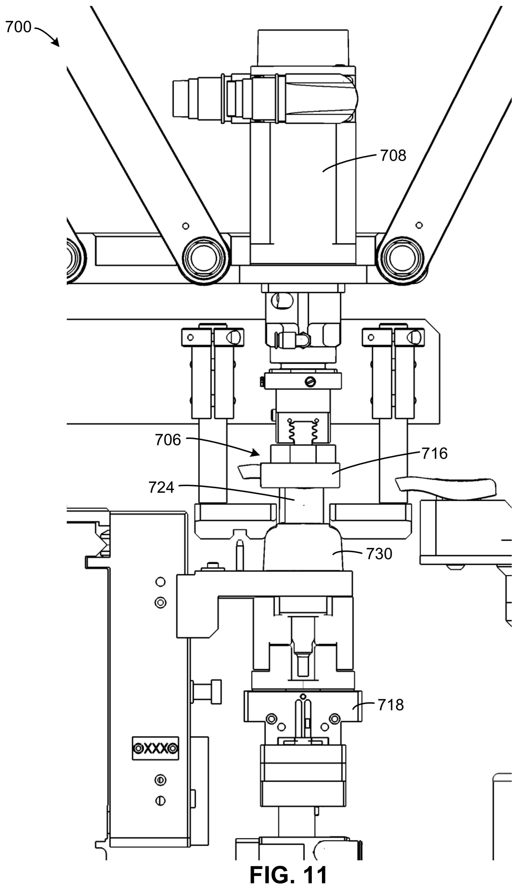

Referring to FIG. 11, another example workpiece assembly 706 at an example rotating station 700 is shown. Rotating station 700 can include similar components to rotating stations 300 and 500. For example, rotating station 700 includes an actuator 708, an upper tooling 716, and a lower tooling 718. In the example illustrated, the workpiece assembly 706 is a pump assembly. The workpiece assembly 706 includes an actuator 724 and a pump. The pump includes a closure 730. The stationary workpiece can include the closure 730. The rotational workpiece can include the actuator 724.

Returning to FIG. 5, in the example illustrated, the workpiece assembly 306 has an initial orientation. For example, the workpiece assembly 306 has an initial radial orientation. The automated mass production system 100 can determine the initial orientation of the workpiece assembly 306. In some embodiments, the workpiece assembly 306 can arrive at the rotating station 300 in any radial orientation, such as a pre-determined radial orientation. In the example illustrated, the workpiece assembly 306 has an initial radial orientation based on a radial position of the outer housing 402 relative to the power spring 406. The initial orientation of the workpiece assembly 306 can be determined based on other components of the workpiece assembly 306.

Referring to FIG. 7, in some embodiments in which the workpiece assembly 506 includes a pump assembly, the initial orientation can be determined based on the initial orientation of the thread starts on the actuator 524 and/or the chaplet 526.

Referring to FIG. 11, in some embodiments in which the workpiece assembly 706 includes a pump assembly, the initial orientation can be determined based on the orientation of the closure 730 relative to the actuator 724.

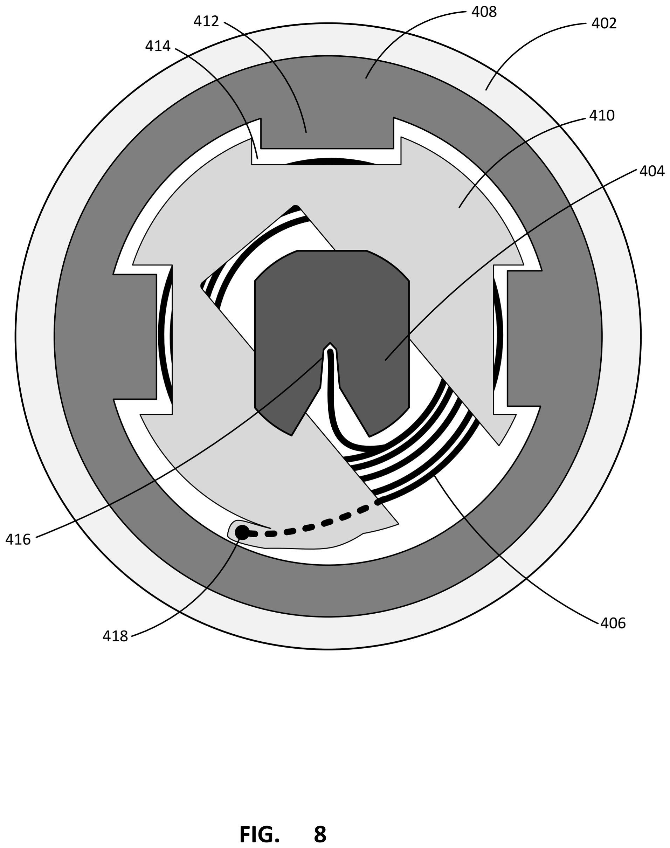

Referring to FIG. 8, in some embodiments, the initial orientation of the workpiece assembly 306 can be determined using a vision system. FIG. 8 depicts a schematic representation of the image data captured by the vision system. The control system 120, 220 can receive image data 600 associated with the workpiece assembly 306. In some embodiments, the image data 600 can include a plan view (e.g., top view) of the workpiece assembly 306. The image data 600 may be captured at the rotating station or prior to the workpiece assembly being received at the rotating station. Determining the initial orientation of the workpiece assembly 306 can include determining, from the image data 600, a radial position of the workpiece assembly 306 or features of the workpiece. For example, in the illustrated embodiment which includes a power spring assembly, the vision system can identify a radial orientation of the outer housing 402 relative to a radial orientation of the power spring 406, based on visual landmarks and/or features of the outer housing 402 and power spring 406, respectively.

As depicted in FIG. 8, the image data 600 may capture the relative orientation of the outer housing 402, internal plunger rod guide 404, power spring 406, lock ring 408 and power spring housing 410. The internal plunger rod guide may comprise a feature 416 for capturing a first end of the power spring. The lock ring 408 may comprise features 412 for engaging with corresponding features 414 of the power spring housing 410. The features 412, 414 may be vertically offset from each other such that they are engaged when vertically aligned. Accordingly, when the features 412, 414 are not aligned, the power spring housing 410 can rotate. The power spring 406 may be secured to the power spring housing at the other end of the power spring 418. The lock ring may be releasably secured to the inner plunger rod such that when the lock ring is secured to the power spring housing through interaction of the engaging features 412, 414, the power spring does not unwind. The lock ring may be coupled to the internal plunger rod directly or through one or more components that are in turn coupled to the plunger rod, such as the outer housing 402. When the lock ring is disengaged, the spring may be free to unwind, at least partially, and provide a rotational force to rotate the plunger rod relative to the outer housing. The rotational movement can be translated to linear movement.

A rotating value can be determined based on the initial orientation of the workpiece assembly 306. That is, the degrees of rotations of the power spring necessary to provide the desired potential energy (i.e., mechanical energy) to the spring will depend upon the initial orientation of the spring. The rotating value can represent, or correspond to, the amount of torque and/or rotational force that should be applied to the workpiece assembly 306. In some embodiments, the rotating value corresponds to a number of degrees of rotation calculated to achieve a predetermined torque or a mechanical engagement state, such as a threaded engagement or a locked position, in the rotational workpiece. In automated mass production processes, it is generally desirable for the automated mass production system 100 to process similar workpieces in a similar manner. For example, it is generally desirable for the rotating station 300 to apply the same amount of torque and/or rotational force to each workpiece assembly 306 of the same type. Since the initial orientation of the workpiece assembly 306 may vary, the rotating value to be applied by the rotating station 300 may differ for each workpiece assembly 306, depending on the initial orientation.

In some embodiments, a baseline rotating value can be used to determine the rotating value. In some embodiments, a user can provide the baseline rotating value. In some embodiments, the baseline rotating value can be predetermined based on the type of workpiece assembly being processed. The baseline rotating value corresponds to a number of degrees to rotate the rotational workpiece to apply a desired torque and/or rotational force to the rotational workpiece. The rotating value can be determined by adjusting the baseline rotating value based on the initial orientation. For example, in some embodiments, the baseline rotating value can be 3070 degrees clockwise. If a workpiece assembly is determined to have an initial orientation of 50 degrees, the rotating value can be determined to be 3020 degrees clockwise, as the workpiece assembly already has an initial orientation of 50 degrees. As another example, if another workpiece assembly is determined to have an initial orientation of -50 degrees, the rotating value can be determined to be 3120 degrees clockwise.

Returning to FIG. 5, the automated mass production system 100 can prepare the workpiece assembly 306 for processing. In some embodiments, preparing the workpiece assembly 306 for processing involves coupling the tooling 316 and/or 318 to the workpiece assembly 306. In some embodiments, coupling the tooling 316 and/or 318 to the workpiece assembly 306 involves coupling one or more portions of the tooling 316 and/or 318 to one or more components and/or workpieces of the workpiece assembly 306. For example, the tooling 316 and/or 318 may be used to grip the workpiece assembly 306. In some embodiments, the tooling 316 and/or 318 may be used to support, lift, push up, and/or push down on the workpiece assembly 306. In some embodiments, the tooling 316 and/or 318 can engage with the workpiece assembly 306 for stabilization and/or maintaining the workpiece assembly 306 in a certain position and/or orientation. Other manners of coupling the tooling 316 and/or 318 with the workpiece assembly 306 are possible. In some embodiments, preparing the workpiece assembly 306 for processing involves moving and/or repositioning one or more portions of the rotating station 300.

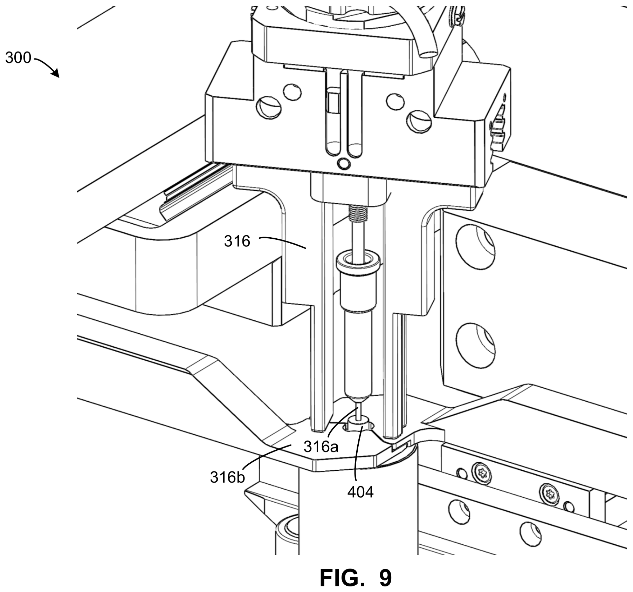

Referring to FIG. 9, a portion of rotating station 300 is shown. In the illustrated example involving a power spring assembly, the tooling 316 includes a mandrel 316a. The mandrel 316a is aligned and coupled with the plunger rod guide 404 of the workpiece assembly 306. In some embodiments involving the power spring assembly, other toolings of the rotating station 300 can couple with the workpiece assembly 306. For example, a lower support can couple with a lower portion of the workpiece assembly 306 to support the workpiece assembly 306 from below. As another example, crowders 316b can couple with the plunger rod guide 404 for stabilization and/or alignment purposes.

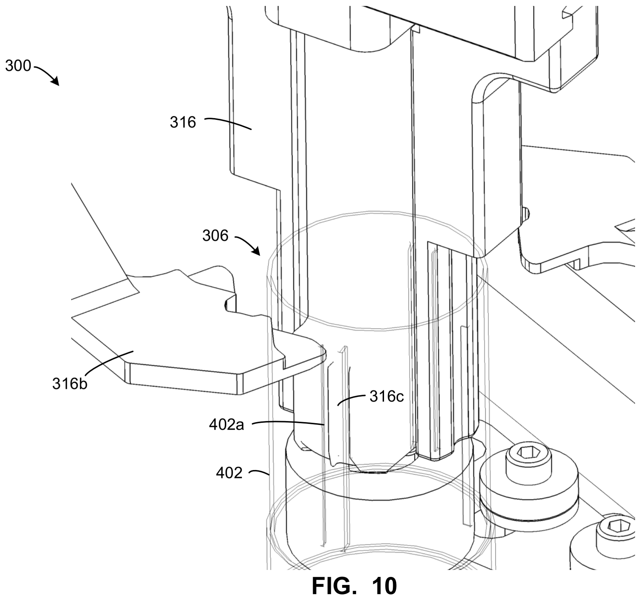

Referring to FIGS. 4 and 5, in the illustrated example of a power spring assembly, the tooling 316 can be coupled to the workpiece assembly 306 by driving an actuator 308 of the tooling 316 to position the tooling 316 at a desired vertical position. The desired vertical position can be determined to enable the tooling 316 to engage with one or more ribs on an inner surface of the outer housing 402. Referring to FIG. 10, shown therein is a portion of rotating station 300 engaged with an example workpiece assembly 306. The outer housing 402 of workpiece assembly 306 is illustrated in a transparent manner for the ease of illustration of the rib feature. As shown, the inner surface of the outer housing 402 can have one or more ribs 402a. The tooling 316 can be configured to engage with the rib(s) 402a. For example, the tooling 316 can have one or more grooves 316c that correspond to the one or more ribs 402a of the outer housing 402. The tooling 316 is positioned at a desired vertical position such that the tooling 316 can physically engage with the rib(s) 402a.

Referring to FIG. 7, in the illustrated example involving a pump assembly, coupling the tooling 516 to the workpiece assembly 506 involves grasping the actuator 524 with an actuator tooling 516. In some embodiments, the actuator tooling 516 can be a nested vacuum tooling.

Referring to FIG. 11, in the illustrated example involving a pump assembly, coupling the tooling 716 to the workpiece assembly 706 involves grasping the actuator 724 with an actuator tooling 716.

Returning to FIGS. 4 and 5, while preparing the workpiece assembly 306 for processing, the automated mass production system 100 can evaluate sensor data generated by the sensor(s) 314 to determine whether there is a preparation error associated with the workpiece assembly 306. For example, the sensor data can be used to determine whether a position of the workpiece assembly 306 and/or tooling 316 and/or 318 is within an acceptable error range. In some embodiments, a misalignment between the tooling 316 and/or 318 and the workpiece assembly 306 can result in the tooling 316 and/or 318 and/or the workpiece assembly 306 being positioned outside of an acceptable and/or expected position for processing. In some embodiments, a fault in the tooling 316 and/or 318 and/or a rotating station component can result in the tooling 316 and/or 318 and/or the workpiece assembly 306 being positioned outside of an acceptable and/or expected position for processing. In some embodiments, a defect in the workpiece assembly 306 can result in the tooling 316 and/or 318 and/or the workpiece assembly 306 being positioned outside of an acceptable and/or expected position for processing.

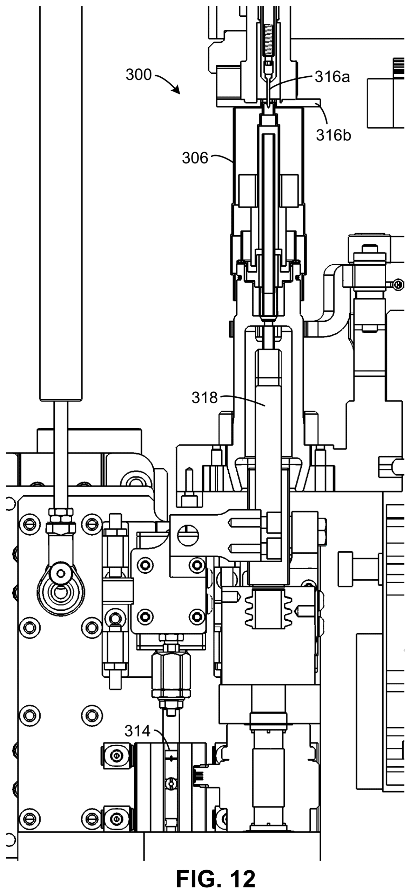

Referring to FIG. 12, a cross-sectional view of a portion of rotating station 300 is shown. In the illustrated example, determining the preparation error associated with the workpiece assembly 306 involves determining that a position of the plunger rod guide 404 is outside of an acceptable position range. For example, in instances in which the mandrel 316a is misaligned with the plunger rod guide 404, the mandrel 316a can push the plunger rod guide 404 downwards, causing the plunger rod guide 404 to have a vertical position that is outside of an acceptable position range. Such vertical position error can be detected based on the sensor data generated by the sensor 314, such as a mechanical switch.

In some embodiments, determining the preparation error associated with the workpiece assembly 306 involves determining that an actuator position lag is outside of an acceptable actuator position lag range. The actuator position lag represents a difference between an actual vertical position of the tooling 316 and/or 318 and a desired vertical position of the tooling 316 and/or 318. For example, to prepare the tooling 316 for coupling with the workpiece assembly 306, the actuator 308 can drive the tooling 316 to a desired vertical position. A preparation error can be determined when the actual vertical position of the tooling 316 according to the actual actuator 308 position is outside of an acceptable range, based on the desired vertical position according to the desired actuator 308 position.

The automated mass production system 100 can flag the workpiece assembly 306 for review in response to determining a preparation error associated with the workpiece assembly 306. Review can include, for example, removing the workpiece assembly 306 from the automated mass production process and/or performing further quality control. In some embodiments, further quality control can include one or more sensor checks and/or threshold checks (e.g., check of the actuator feedback loop). The checks performed during further quality control can have a generally fast response time (e.g., without requiring significant additional processing time). In some embodiments, workpiece assemblies 306 that are flagged for review due to a determined preparation error can be removed from the automated mass production process at the rotating station 300 or at a downstream processing station. In some embodiments, the automated mass production system 100 does not continue processing (e.g., rotating) the workpiece assembly 306 when a preparation error associated with the workpiece assembly 306 is determined. For example, the automated mass production system 100 can proceed to advance the workpiece assembly 306 downstream the rotating station 300 without completing an operation or process (e.g., rotating) on the workpiece assembly 306. For example, the automated mass production system 100 can advance workpiece assembly 306 that was flagged due to a preparation error downstream the rotating station 300 without winding the power spring 406 around the plunger rod guide 404. As another example, in embodiments in which the workpiece assembly 506 is a pump assembly, the automated mass production system 100 can advance a pump assembly that was flagged due to a preparation error downstream the rotating station 500 without threading the actuator 524 onto the chaplet 526. As a further example, in embodiments in which the workpiece assembly 706 is a pump assembly, the automated mass production system 100 can advance a pump assembly that was flagged due to a preparation error downstream the rotating station 700 without locking the actuator 724 onto the closure 730. In some embodiments, the automated mass production system 100 can perform one or more processing steps (e.g., locking a position of the workpiece assembly 306) prior to advancing the flagged workpiece assembly 306 downstream the rotating station 300.

Returning to FIG. 5, the automated mass production system 100 can process the workpiece assembly 306 at the rotating station 300. For example, the rotating station 300 can rotate the rotational workpiece of the workpiece assembly 306. This can involve, for example, driving the tooling 316 to rotate the rotational workpiece relative to the stationary workpiece according to the rotating value. The rotation can include any suitable rotational motion, such as winding, threading, and/or spinning. In some embodiments, the rotational workpiece is rotated around the stationary workpiece. In some embodiments the rotational workpiece is rotated within the stationary workpiece.

Referring still to FIG. 5, in the illustrated example, rotating the rotational workpiece involves driving the tooling 316 to wind the power spring 406 around the plunger rod guide 404. In some embodiments, this involves rotating the outer housing 402, which is coupled to the power spring 406, to wind the power spring 406 around the plunger rod guide 404. In some embodiments, an actuator 308 (e.g., a servomotor) drives the tooling 316 to rotate the outer housing 402 and/or the power spring 406.

Referring to FIG. 7, in the illustrated example, rotating the rotational workpiece involves driving the tooling 516 to thread the actuator 524 onto the chaplet 526 of the pump. In some embodiments, this involves pressing the actuator 524 onto the piston 528 of the pump and threading the actuator 524 around the chaplet 526 of the pump.

Referring to FIG. 11, in the illustrated example, rotating the rotational workpiece involves driving the tooling 716 to rotate the actuator 724 relative to the closure 730 to position the actuator 724 in a locked position.

The automated mass production system 100 can monitor the rotating process for identifying a rotating error and flagging the workpiece assembly 306 for review in response to identifying the rotating error. In some embodiments, a rotating error occurs when too much or too little torque and/or rotational force is applied to the workpiece assembly 306. In some embodiments, a rotating error occurs when the torque and/or rotational force causes a misalignment or other defect of the workpiece assembly 306. When a rotating error occurs, the automated mass production system 100 can flag the workpiece assembly 306 to be reviewed, which can include, for example, removing the workpiece assembly 306 from the automated mass production process and/or performing further quality control. In some embodiments, the rotating station 300 can proceed to perform one or more processes on the workpiece assembly 306, whether or not a rotating error has occurred. For example, the rotating station 300 can proceed to lock a position of the rotational workpiece relative to the stationary workpiece, whether or not a rotational error occurred during processing.

Referring to FIG. 5, in the illustrated example, identifying the rotating error involves determining that a force generated by driving the tooling 316 to wind the power spring 406 around the plunger rod guide 404 is outside of an acceptable force range. For example, sensor data generated by the load cell during winding can be used to determine that the force is outside of an acceptable force range. The acceptable torque or rotational force may depend upon one or more other characteristics of the assembly process. For example, the acceptable torque for a power spring may correspond to the amount of rotation applied to the power spring. Similarly, other acceptable torques or rotation forces may depend upon a vertical position of an actuator or component of the workpiece. For example, the amount of force applied to a screw cap or other threaded engagement may raise to a final peak torque when it is lowered, or moved, an expected amount depending upon the thread pitch.

Referring to FIG. 7, in the illustrated example, identifying the rotating error involves determining that a force generated by driving the tooling 516 to thread the actuator 524 onto the chaplet 526 is outside of an acceptable force range. For example, sensor data generated by the load cell during threading can be used to determine that the force is outside of an acceptable force range.

Referring to FIG. 11, in the illustrated example, identifying the rotating error involves determining that a force generated by driving the tooling 716 to lock a position of the actuator 724 relative to a position of the closure 730 is outside of an acceptable force range. For example, sensor data generated by the load cell during locking (i.e., rotating) can be used to determine that the force is outside of an acceptable force range.

Determining the torque or rotational force applied may be measured by one or more sensors capable of measuring the applied torque. Additionally or alternatively the torque or rotational force can be determined based on the current supplied to drive the motor or servo providing the rotational force. The supplied current can be converted to the applied torque based on known characteristics of the motor or servo.

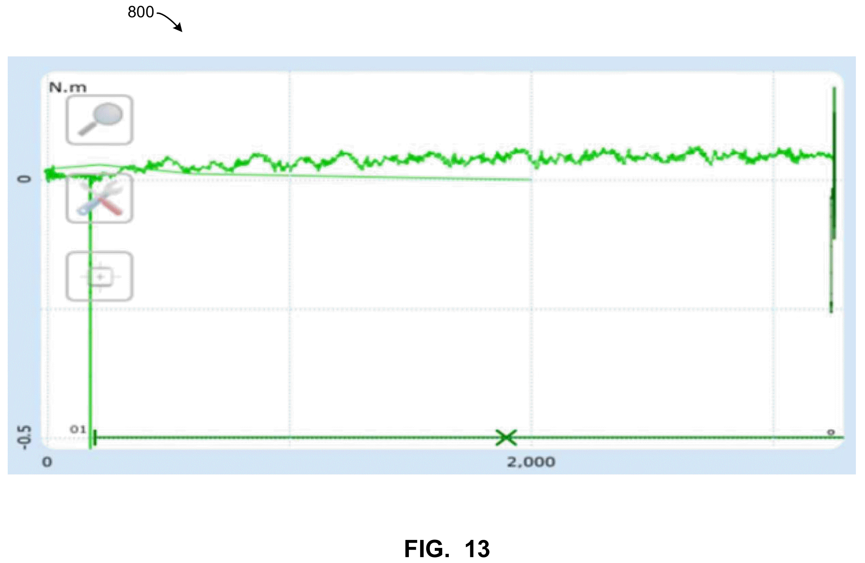

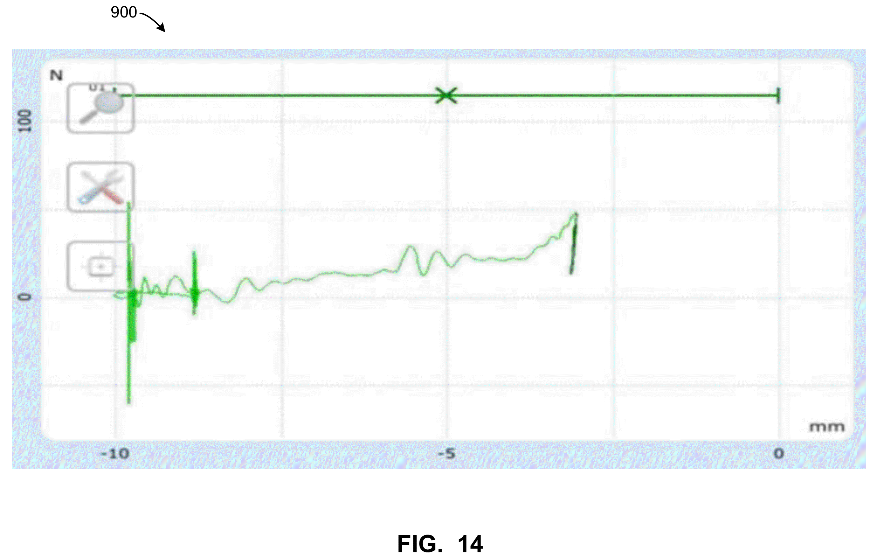

Referring to FIGS. 13 and 14, example characterization profiles are shown. The control system 120, 220 can receive one or more characterization profiles. The characterization profile represents an expected data profile of one or more of the sensors 314 during processing, such as during the rotation of the rotational workpiece, and/or during preparation for processing, such as while coupling the tooling 316 and/or 318 to the workpiece assembly 306. In some embodiments, a rotating error can be identified when sensor data deviates from the characterization profile beyond an acceptable range. In some embodiments involving a power spring assembly, identifying the rotating error can involve comparing the characterization profile to an actual data profile from monitoring of one or more of the sensors 314 during winding of the power spring 406. In some embodiments, the characterization profile includes a torque graph, such as graph 900 illustrated in FIG. 14. The torque graph can represent the expected torque profile to be applied to the rotational workpiece. Comparing the torque graph to the actual torque profile during winding can involve matching one or more features of the torque graph 900 and the actual data profile. Any suitable feature can be used. For example, the torque graph can be used to determine whether the actual data profile is within an expected range at a certain corresponding positional range. In some embodiments, the characterization profile includes a force displacement graph, such as graph 800 illustrated in FIG. 13. The force displacement graph can represent the expected displacement of one or more components of rotating station 300, based on, for example, sensor data generated at load cell 314a.

In some embodiments, the rotating station 300 can perform further processing steps on the workpiece assembly 306. In some embodiments, the rotating station 300 can lock a position of the rotating workpiece relative to a position of the stationary workpiece. Returning to FIGS. 6A-D, the illustrated example includes ring 408 to lock the power spring 406 relative to the plunger rod guide 404, so that the wound power spring 406 does not unwind until the ring 408 is released.

The rotating station 300 can retract the tooling 316 and/or 318 from the workpiece assembly 306. The automated mass production system 100 can proceed to advance the workpiece assembly 306 downstream the rotating station 300 (e.g., via supply carrier 302) to the subsequent station and/or portion of the automated mass production system 100.

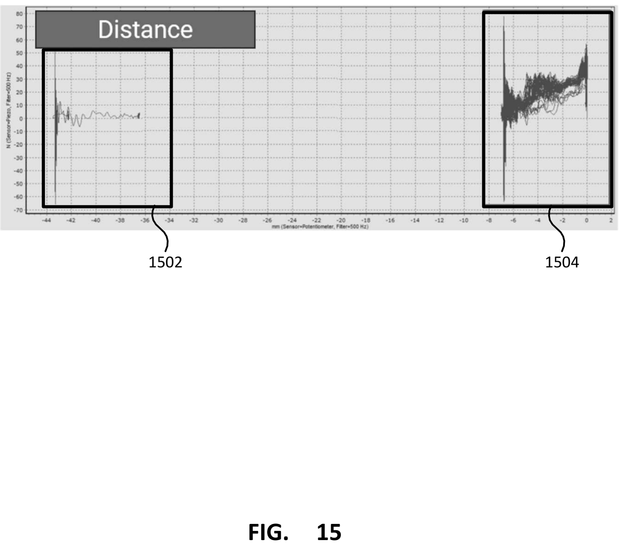

FIG. 15 depicts a force vs. distance graph based on monitoring during the workpiece processing. The graph depicted in FIG. 15 depicts plots of a number of cycles or parts. As depicted, the graph depicts two areas 1502, 1504. The plot in area 1502 is associated with an error since the position error for the servo is too large. That is, the force at the position is too large indicating a potentially broken, mis-formed or misaligned component. Regardless of the cause of the relatively large force in the unexpected region, further processing of the workpiece may be aborted and the part flagged as a failure. The plots depicted in the second region 1502 depict the expected force at the positioning and so can be associated with a successful operation.

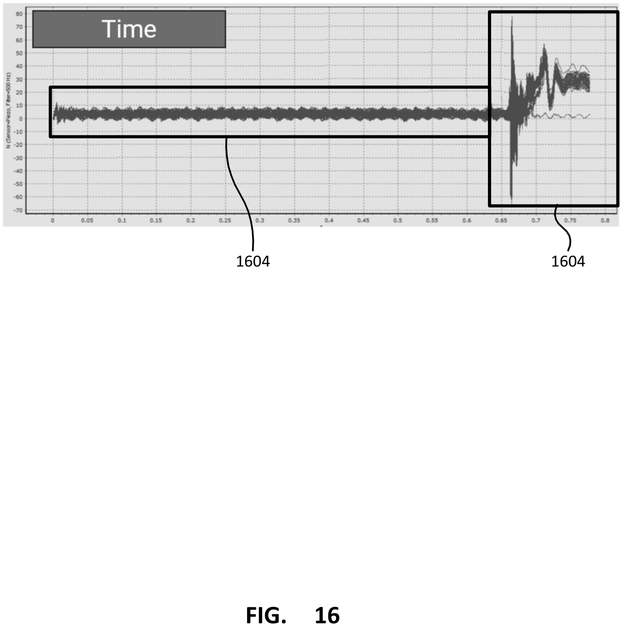

FIG. 16 depicts a force vs. time graph based on monitoring during the workpiece processing. When winding a power spring, the linear distance of an actuator may not change and as such the force vs. distance graph depicted above may not be particularly useful. It is possible to monitor the force relative to other characteristics such as the time spent winding the spring. Assuming the winding rate is known it is possible to translate the time to an amount of rotations. Alternatively, the graph could depict the force vs. degrees of rotation. As depicted in the first region 1602 of the graph, the force remains relatively constant while the power spring is wound. When the winding is complete, the force may spike as the power spring is locked in position and the part handed off for further processing as depicted in the second region 1604 of the graph. If spikes are detected during the winding process, an error may be flagged as it may represent a misalignment or other issue with the power spring.

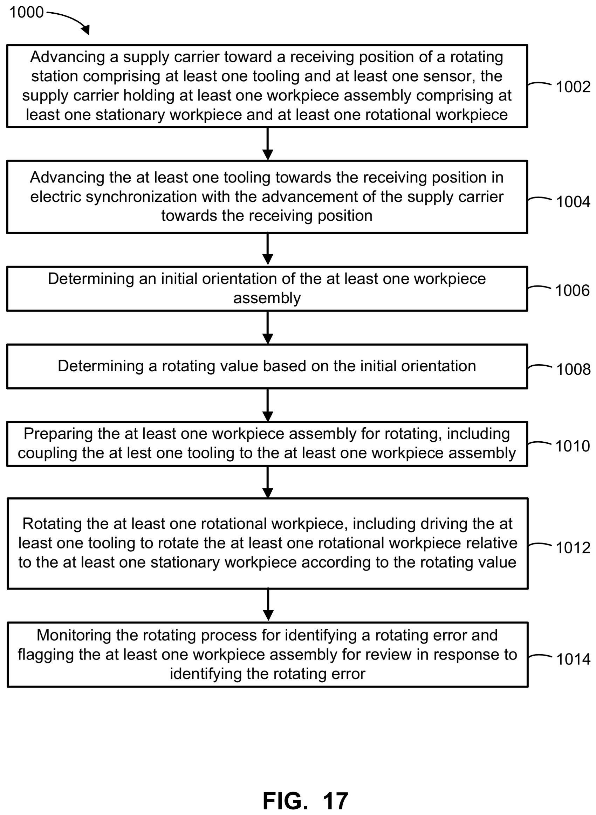

Referring to FIG. 17, an example method 1000 of processing workpieces in an automated mass production process will now be described.

At 1002, in the example illustrated in FIG. 4, the automated mass production system 100 can advance a supply carrier 302 towards a receiving position 304 of a rotating station 300, the supply carrier 302 holding at least one workpiece assembly 306, the workpiece assembly 306 including at least one stationary workpiece and at least one rotational workpiece, and the rotating station 300 including at least one tooling 316 and at least one sensor 314. In the example illustrated in FIG. 4, the at least one stationary workpiece includes a plunger rod guide 404, and the at least one rotational workpiece includes a power spring 406 and an outer housing 402. In the example illustrated in FIG. 4, the at least one sensor 314 includes a mechanical switch positioned on the rotating station 300 for determining a vertical position of the plunger rod guide 404. In the example illustrated in FIG. 4, the at least one sensor 314 further includes a load cell positioned on the rotating station 300 for measuring a force generated during said rotating.

At 1004, in the example illustrated in FIG. 4, the automated mass production system 100 can advance at least one tooling 316 towards the receiving position 304 in electronic synchronization with the advancement of the supply carrier 302 towards the receiving position 304.

At 1006, the automated mass production system 100 can determine an initial orientation of the at least one workpiece assembly 306. In the example illustrated in FIG. 8, the automated mass production system 100 can also receive image data 600 associated with the at least one workpiece assembly 306. In the illustrated example, the automated mass production system 100 can determine the initial orientation of the workpiece assembly 306 by determining, from the image data 600, a radial position of the workpiece assembly 306.

At 1008, the automated mass production system 100 can determine a rotating value based on the initial orientation. In some embodiments, the automated mass production system 100 can receive a baseline rotating value, the baseline rotating value corresponding to a number of degrees to rotate the rotational workpiece to apply a desired torque to the rotational workpiece. The automated mass production system 100 can determine the rotating value based on the initial orientation by adjusting the baseline rotating value based on the initial orientation to determine the rotating value.

At 1010, the automated mass production system 100 can prepare the at least one workpiece assembly 306 for rotating, including coupling the at least one tooling 316 to the at least one workpiece assembly 306. In the example illustrated in FIG. 9, the automated mass production system 100 can couple the at least one tooling 316 to the at least one workpiece assembly 306 by coupling a mandrel 316a of the at least one tooling 316 to the plunger rod guide 404. In some embodiments, the automated mass production system 100 can couple the at least one tooling 316 to the at least one workpiece assembly 306 by driving an actuator 308 of the at least one tooling 316 to position the at least one tooling 316 at a desired vertical position. In the example illustrated in FIG. 10, the automated mass production system 100 can determine the desired vertical position to enable the at least one tooling 316 to engage with one or more ribs 402a on an inner surface of the outer housing 402.

In some embodiments, while the automated mass production system 100 prepares the at least one workpiece assembly 306 for rotating, the automated mass production system 100 can evaluate sensor data generated by the at least one sensor 314 to determine whether there is a preparation error associated with the at least one workpiece assembly 306 and flag the at least one workpiece assembly 306 for review in response to determining the preparation error associated with the workpiece assembly 306. In the example illustrated in FIG. 12, the automated mass production system 100 can determine the preparation error associated with the at least one workpiece assembly 306 by determining that a position of the plunger rod guide 404 relative to a portion of the at least one tooling 316 is outside of an acceptable position range. In some embodiments, the automated mass production system 100 can determine the preparation error associated with the at least one workpiece assembly 306 by determining that an actuator 308 position lag is outside of an acceptable actuator position lag range, the actuator position lag representing a difference between an actual vertical position of the at least one tooling 316 and the desired vertical position of the at least one tooling 316.

In some embodiments, the automated mass production system 100 can review a flagged workpiece assembly by at least one of removing the at least one workpiece assembly 306 from the automated mass production process and performing further quality control.

At 1012, the automated mass production system 100 can rotate the at least one rotational workpiece, including driving the at least one tooling 316 to rotate the at least one rotational workpiece relative to the at least one stationary workpiece according to the rotating value. In the example illustrated in FIG. 4, the automated mass production system 100 can rotate the at least one rotational workpiece by driving the at least one tooling 316 to wind the power spring 406 around the plunger rod guide 404. In some embodiments, the automated mass production system 100 performs 1012 when the automated mass production system 100 does not determine any preparation error associated with the at least one workpiece assembly 306.

At 1014, in the example illustrated in FIG. 4, the automated mass production system 100 can monitor the rotating process for identifying a rotating error and flag the at least one workpiece assembly 306 for review in response to identifying the rotating error. In the illustrated example, the automated mass production system 100 can identify the rotating error by determining that a force generated by said driving the at least one tooling 316 to wind the power spring 406 around the plunger rod guide 404 is outside of an acceptable force range.

In the example illustrated in FIG. 4, the automated mass production system 100 can also receive a characterization profile, the characterization profile representing an expected data profile of the at least one sensor 314 during said winding of the power spring 406. In the illustrated example, the automated mass production system 100 can identify the rotating error by comparing the characterization profile to an actual data profile of the at least one sensor 314 during said winding of the power spring 406. In some embodiments, the characterization profile includes a torque graph 900. In some embodiments, the automated mass production system 100 can compare the characterization profile to an actual data profile of the at least one sensor 314 during said winding of the power spring 406 by matching one or more features of the torque graph 900 and the actual data profile.

The automated mass production system 100 can also lock a position of the at least one rotating workpiece relative to a position of the at least one stationary workpiece, and retract the at least one tooling 316 from the at least one workpiece assembly 306.

The automated mass production system 100 can repeat the method 1000 continuously for each workpiece assembly 306 to rotate rotational workpieces in a continuous automated mass production process. While the automated mass production system 100 advances a first supply carrier 302 to the receiving position 304, the automated mass production system 100 can advance a second supply carrier to a receiving position of a second rotating station for rotating thereat. The automated mass production system 100 can repeat method 1000 at the second rotating station simultaneously to the method on the rotating station 300 to complete the rotating.

Various apparatuses, systems, or processes have been described herein to provide an example of an embodiment of each claimed invention. No embodiment described limits any claimed invention and any claimed invention may cover apparatuses, processes, or systems that differ from those described below. The claimed inventions are not limited to apparatuses, systems, or processes having all of the features of any one apparatus, system, or process described below or to features common to multiple or all of the apparatuses, systems, or processes described below. It is possible that an apparatus, system, or process described herein is not an embodiment of any claimed invention. Any invention disclosed in an apparatus, system, or process described herein that is not claimed in this document may be the subject matter of another protective instrument, for example, a continuing patent application, and the applicants, inventors, or owners do not intend to abandon, disclaim, or dedicate to the public any such invention by its disclosure in this document.

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example, and without limitation, the programmable computers may be a server, network appliance, embedded device, computer expansion module, a personal computer, laptop, personal data assistant, cellular telephone, smart-phone device, tablet computer, a wireless device or any other processor capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented as hardware, software, and combination thereof.

Program code may be applied to input data to perform the functions described herein and to generate output information. The output information is applied to one or more output devices, in known fashion.

Each program may be implemented in a high-level procedural or object-oriented programming and/or scripting language, or both, to communicate with a computer system. However, the programs may be implemented in assembly or machine language, if desired. In any case, the language may be a compiled or interpreted language. Each such computer program may be stored on a storage medium or a device (e.g., ROM, magnetic disk, optical disc) readable by a general or special purpose programmable computer, for configuring and operating the computer when the storage medium or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloadings, magnetic and electronic storage media, digital and analog signals, and the like. The computer useable instructions may also be in various forms, including compiled and non-compiled code.

Various embodiments have been described herein by way of example only. Various modification and variations may be made to these example embodiments without departing from the spirit and scope of the invention, which is limited only by the appended claims.

## Claims

1. A method for processing workpieces in an automated mass production process, the method comprising:
advancing a supply carrier toward a receiving position of a rotating station, the supply carrier holding at least one workpiece assembly, the workpiece assembly comprising at least one stationary workpiece and at least one rotational workpiece, and the rotating station comprising at least one tooling and at least one sensor;
advancing the at least one tooling towards the receiving position in electronic synchronization with the advancement of the supply carrier towards the receiving position;
determining an initial orientation of the at least one workpiece assembly;
determining a rotating value based on the initial orientation;
preparing the at least one workpiece assembly for rotating, including coupling the at least one tooling to the at least one workpiece assembly;
rotating the at least one rotational workpiece by driving the at least one tooling to rotate the at least one rotational workpiece relative to the at least one stationary workpiece according to the rotating value.

2. The method of claim 1, wherein the rotating value corresponds to a number of degrees of rotation calculated to achieve a predetermined torque or a mechanical engagement state, including a threaded engagement or a locked position, in the at least one rotational workpiece.

3. The method of claim 1 or claim 2, further comprising:
monitoring the rotating of the at least one rotational workpiece by comparing sensor data generated by the at least one sensor during said rotating to a characterization profile representing an expected data profile of the at least one sensor, and identifying a rotating error when the sensor data deviates from the characterization profile beyond an acceptable range; and
flagging the at least one workpiece assembly for review in response to identifying the rotating error.

4. The method of claim 3, further comprising:
while preparing the at least one workpiece assembly for rotating, evaluating sensor data generated by the at least one sensor to determine whether there is a preparation error associated with the at least one workpiece assembly and flagging the at least one workpiece assembly for review in response to determining the preparation error associated with the workpiece assembly.

5. The method of any one of claims 1 to 4, wherein the at least one stationary workpiece comprises a plunger rod guide, and the at least one rotational workpiece comprises a power spring and an outer housing, and
wherein rotating the at least one rotational workpiece comprises driving the at least one tooling to wind the power spring around the plunger rod guide to store mechanical energy in the power spring.

6. The method of claim 5 when dependent on claim 4, wherein coupling the at least one tooling to the at least one workpiece assembly comprises coupling a mandrel of the at least one tooling to the plunger rod guide; and
wherein determining the preparation error associated with the at least one workpiece assembly comprises determining that a position of the plunger rod guide relative to a portion of the at least one tooling is outside of an acceptable position range.

7. The method of claim 5 when dependent on claim 4, wherein coupling the at least one tooling to the at least one workpiece assembly comprises:
driving an actuator of the at least one tooling to position the at least one tooling at a desired vertical position; and
wherein determining the preparation error associated with the at least one workpiece assembly comprises determining that an actuator position lag is outside of an acceptable actuator position lag range, the actuator position lag representing a difference between an actual vertical position of the at least one tooling and the desired vertical position of the at least one tooling.

8. The method of any one of claims 3 to 7, further comprising receiving a characterization profile, the characterization profile representing an expected data profile of the at least one sensor during said rotating of the at least one rotational workpiece,
wherein identifying the rotating error comprises comparing the characterization profile to an actual data profile of the at least one sensor during said rotating of the at least one rotational workpiece.

9. The method of claim 8, wherein the characterization profile comprises a torque graph; and
wherein said comparing comprises matching one or more features of the torque graph and the actual data profile.

10. The method of claim 8 or claim 9, wherein identifying the rotating error further comprises determining that a force generated by said driving the at least one tooling to rotate the at least one rotational workpiece relative to the at least one stationary workpiece is outside of an acceptable force range.

11. The method of any one of claims 1 to 10, further comprising:
receiving image data associated with the at least one workpiece assembly,
wherein determining the initial orientation of the workpiece assembly comprises determining, from the image data, a radial position of the workpiece assembly.

12. The method of any one of claims 1 to 11, wherein determining the rotating value based on the initial orientation comprises:
receiving a baseline rotating value, the baseline rotating value corresponding to a number of degrees to rotate the rotational workpiece to apply a desired torque to the rotational workpiece; and
adjusting the baseline rotating value based on the initial orientation to determine the rotating value.

13. The method of any one of claims 3 to 12, wherein said review comprises at least one of removing the at least one workpiece assembly from the automated mass production process and performing further quality control.

14. An automated mass production system comprising:
a plurality of supply carriers, each supply carrier holding at least one workpiece assembly and advanceable through a receiving position;
a rotating station adjacent the receiving position, the rotating station including at least one tooling and at least one sensor; and
a control system for synchronizing operation of the supply carriers and rotating station, the control system configured to perform a method according to any one of claims 1 to 13.

15. A non-transitory computer-readable medium storing instructions which when executed by a processor configure the processor to perform a method according to any one of claims 1 to 13.
